# EUROPÄISCHE PATENTSCHRIFT

(11) **EP 0 624 880 B1**
(45) Veröffentlichungstag und Bekanntmachung des Hinweises auf die Patenterteilung: **30.09.1998**
(21) Anmeldenummer: 94106764.7
(22) Anmeldetag: 29.04.1994
(51) Int. Cl.: G06K 19/073, G07F 7/10, G11C 16/06

(54) **Verfahren und Schaltungsanordnung zum Entwerten einer Debit-Karte**
Method and circuit for counting down the value of a debit-card
Procédé et circuit pour décompter une carte de débit

(30) Priorität: 10.05.1993 DE 4315542
(43) Veröffentlichungstag der Anmeldung: 17.11.1994
(73) Patentinhaber: SIEMENS AKTIENGESELLSCHAFT, 80333 München (DE)
(72) Erfinder: Schrenk, Hartmut, Dr. rer. nat., D-85540 Haar (DE)

(56) Entgegenhaltungen:
- EP-A- 0 321 727
- EP-A- 0 519 847
- WO-A-86/06205
- GB-A- 2 214 379
- US-A- 4 301 535
- PATENT ABSTRACTS OF JAPAN vol. 8, no. 137 (P-282)26. Juni 1984 & JP-A-59 036 393

## Beschreibung

Die Erfindung betrifft ein Verfahren zum Entwerten geldwerter Einheiten in einer integrierbaren elektronischen Schaltung einer Debit-Karte, die einen ausnichtflüchtigen, elektrisch löschbaren und beschreibbaren speicherzellen bestehenden Zählspeicher enthält, der als mehrstufiger Zähler betrieben wird, und einen ausnichtflüchtigen, elektrisch löschbaren und beschreibbaren speicherzellen bestehenden Kontrollspeicher enthält, der den Zählerstufen zugeordnete Kontrollspeicherbereiche aufweist.

Die Erfindung betrifft außerdem eine Schaltungsanordnung zur Durchführung des Verfahrens bei der der Zählspeicher in Teilbereiche unterschiedlicher Wertigkeit aufgeteilt ist und bei dem durch Schaltungsmittel gesteuert wird, daß jeder Teilbereich nur dann gelöscht wird, wenn ein Übertragbit in eine vorher unbeschriebene Speicherzelle des Teilbereichs der nächtshöheren Wertigkeit geschrieben wird, und bei der ein Bit des Kontrollspeichers jeweils einem Teilbereich zugeordnet ist, und der Kontrollspeicher durch Schaltungsmittel gesteuert wird, daß eine Speicherzelle des Kontrollspeichers beschrieben wird, wenn eine Speicherzelle des zugeordneten Teilbereichs des Zählspeichers beschrieben wird, und gelöscht wird, wenn der nächst niedrigerwertiger Teilbereich des Zählspeichers gelöscht wird.

Debit-Karten sind vorausbezahlte Datenträgeranordnungen, die eine Bezahlung von Waren oder gebührenpflichtigen Diensten, wie z.B. Telefongespräche, ermöglichen. Diese Chipkarten enthalten als wesentliches Element einen nichtflüchtigen elektronischen Datenspeicher, in dem Daten, z.B. ein geldwertes Guthaben, gespeichert werden. Der Datenspeicher wird üblicherweise als ein nichtflüchtiger, elektronisch beschreibbarer und löschbarer Speicher vom Typ EEPROM verwendet.

Der Speicher ist in Teilbereiche aufgeteilt, denen eine unterschiedliche Wertigkeit zugeordnet ist. Beim Entwerten des Speichers werden zuerst im niedrigstwertigen Teilbereich die Speicherzellen entsprechend den verbrauchten Einheiten beschrieben. Sind alle Speicherzellen eines Teilbereichs beschrieben, erfolgt ein Übertrag in den nächsthöheren Teilbereich, indem dort eine noch unbeschriebene Speicherzelle beschrieben wird und der verbrauchte Teilbereich gelöscht wird, so daß wiederum sämtliche in ihm enthaltene gelöschte Speicherzellen entwertet, d.h. beschrieben, werden können. Der Speicher wird also als mehrstufiger Zähler benutzt. Wenn während des Verarbeitungsablaufs für einen Übertrag der Vorgang unterbrochen wird, z.B. durch Geräteausfall oder gewaltsame Entnahme der Chipkarte aus dem Bediengerät, kann die Karte einen Zustand einnehmen, bei dem der Übertrag bereits in den höherwertigen Teilbereich des Speichers geschrieben wurde, der niedrigerwertige Bereich aber noch nicht gelöscht worden ist.

Deshalb wird in der Europäischen Offenlegungsschrift EP 0 519 847 vorgeschlagen, einen zweiten, identischen Zählspeicher zu verwenden, in dessen Zählbereiche die Schreibdaten des ersten Zahlbereichs zu Kontroll- und Sicherungszwecken zwischengespeichert werden. Bei einer Unterbrechung kann nun festgestellt werden, ob bei geschriebenem Übertragbit der niedrigerwertige Zahlerbereich bereits ordnungsgemäß gelöscht wurde. Dadurch ergibt sich ein verbesserter Schutz des Benutzers vor Wertverlust bei Störungen. Dies wird jedoch mit einem relativ hohen schaltungstechnischen Aufwand für den weiteren Speicherbereich und die entsprechende Adressierungs- und Steuerlogik erreicht. Außerdem können durch Fertigungstoleranzen Ungleichheiten zwischen den beiden Speichern z.B. in Bezug auf die Höhe der Programmierspannung und der damit einhergehenden unterschiedlichen Programmiergeschwindigkeiten in beiden Speichern ergeben, die sowohl für Diensteanbieter als auch Benutzer nachteilig sein können. Insbesondere könnte eine Karte dann bewußt mißbräuchlich manipuliert werden, indem ein Zahlerbereich gelöscht wird, ohne daß ein Übertragbit geschrieben wird.

Die Aufgabe der vorliegenden Erfindung besteht darin, ein Verfahren und eine Schaltungsanordnung zur Durchführung des Verfahrens zum Entwerten einer Debit-Karte anzugeben, das mit weniger schaltungstechnischem Aufwand realisierbar ist, bei dem der Benutzer vor Wertverlust bei einer Unterbrechung geschützt ist, aber auch ein zuverlässiger Schutz gegen mißbräuchliche Manipulation gegeben ist.

Diese Aufgabe wird für das Verfahren dadurch gelöst, daß der Inhalt mindestens einer Speicherzelle jedes Speichers mit mindestens zwei verschiedenen Bewertungsschwellen gelesen wird und ein Zählvorgang durch Schreiben einer Speicherzelle des Zählspeichers von den Leseergebnissen abhängig gesteuert wird.

Bei einem solchen Verfahren ist es möglich, daß einem Zählbereich ein Kontrollspeicherbereich mit nur einem einzigen Bit zugeordnet wird. Die Adressierung des Kontrollspeichers wird gleichzeitig mit der Adressierung des zugeordneten Zählerbereichs ausgeführt, so daß kein wesentlicher zusätzlicher Schaltungsaufwand zur Adressierung des Kontrollspeichers notwendig ist.

Eine mögliche mißbräuchliche Manipulation der Zahl daten könnte darin bestehen, daß kurze Schreibimpulse auf Zählerspeicher und Kontrollbit angewendet werden, wobei außerdem im Zahl speicher verschiedene Speicherzellen angesprochen werden könnten. Als kummulierter Effekt könnte sich dann ergeben, daß das Kontrollbit zwar geschrieben ist, der Zählspeicher jedoch nicht. Somit wäre es möglich, daß danach der entsprechende niedrigerwertige Zahlerbereich des Zählspeichers gelöscht wird, ohne daß ein Übertrag in den nächsthöheren Zählerbereich geschrieben wurde. Eine solche mögliche Manipulation wird aber durch die erfindungsgemäße Bewertung des Inhalts mindestens einer Speicherzellen, vorzugsweise eines Übertragbits und des zugeordneten Kontrollbits, mit mindestens zwei verschiedenen Bewertungsschwellen ausgeschlossen. Durch diese Maßnahme ist nämlich feststellbar, ob ein kurzzeitiger, mißbräuchlicher Schreibimpuls, der zwar aufgrund der kummulativen Wirkung im Kontrollbit zu einem Beschreiben, im Zählerspeicherbereich jedoch nicht zum Beschreiben ausreicht, vorliegt. Durch entsprechende Steuerung kann dann der Schreibvorgang für das Übertragbit und das Kontrollbit und der nachfolgende Löschvorgang für das Kontrollbit und den niedrigerwertigen Zahlerbereich so gesteuert werden, daß die Debit-Karte blockiert oder entwertet wird.

Üblicherweise werden für die EEPROM-Zellen des Zählerspeichers und des Kontrollspeichers n-Kanal-Transistoren verwendet. Ein erster n-Kanal-Transistor weist ein schwebendes Gate auf, durch das die Schwellenspannung des Transistors programmierbar ist. Ein Anschluß der Drain-Source-Strecke des ersten Transistors ist mit einem Bezugspotential verbunden, ein weiterer Anschluß ist über die Drain-Source-Strecke eines zweiten n-Kanal-Transistors, ohne schwebendes Gate, mit einer Leseleitung verbunden. Die Gateelektrode des zweiten Transistors wird von einem Auswahlsignal gesteuert. Eine Speicherzelle wird mittels des ersten Transistors geschrieben, wenn das Steuergate auf niedrigem Potential liegt und der Drainanschluß in Folge des durchgesteuerten Auswahltransistors auf Programmierpotential, beispielsweise 20 Volt geschaltet wird. Ein Löschen der Speicherzelle erfolgt dadurch, daß das Steuergate auf Löschpotential, beispielsweise 20 Volt geschaltet wird. Beim Anlegen einer Lesespannung an das Steuergate zeigt ein leitender erster Transistor den geschriebenen Zustand an, ein gesperrter Transistor den gelöschten Zustand. Ist die Schwellenspannung relativ hoch, ist der Transistor stark gelöscht, was darauf schließen läßt, daß der Speicherzustand durch einen ordnungsgemäßen Löschimpuls herbeigeführt wurde. Liegt die Schwellenspannung relativ niedrig, jedoch noch oberhalb eines mittleren Wertes, kann rückgeschlossen werden, daß die Speicherzelle nur schwach gelöscht wurde, was beispielsweise auf eine Manipulation zurückzuführen ist. Ebenso weist eine sehr niedrig liegende Schwellenspannung auf einen ordnungsgemäß geschriebenen Zustand hin, eine weniger niedrig liegende Schwellenspannung auf einen evtl. durch Manipulation erzeugten Zustand. Verschiedene Bewertungsschwellen beim Lesen werden durch unterschiedliche Steuergatespannung erzeugt. Durch eine mittlere Steuergatespannung kann nur zwischen einem mittleren gelöschten und dem geschriebenen Zustand unterschieden werden. Durch eine oberhalb der mittleren Steuergatespannung liegende Steuergatespannung kann auch zwischen einem stark und einem schwach gelöschten Zustand unterschieden werden, in entsprechender Weise kann durch eine unterhalb der mittleren Steuergatespannung liegende Steuergatespannung zwischen einem schwach und einem stark geschriebenen Zustand geschrieben werden.

Erfindungsgemäß wird vor einer Schreibphase für einen Übertrag, also dann wenn ein Übertragbit in einen höherwertigen Zahlerbereich und ein Kontrollbit in den Kontrollspeicher geschrieben werden soll, eine Bewertung mit einer ersten Lesespannung ausgeführt, die im Fall der angegebenen n-Kanal-EEPROM-Zellen vorzugsweise hoher liegt als die mittlere Lesespannung. Außerdem wird vor einer Löschphase, d.h., wenn das Kontrollbit und der entsprechende niedrigerwertige Zählerbereich gelöscht werden sollen, die Bewertung mit einer zweiten, bei n-Kanal-EEPROM-Zellen vorzugsweise unterhalb der mittleren Lesespannung liegenden Steuergatespannung durchgeführt. Dann kann entschieden werden, ob die Speicherzellen stark gelöscht oder geschrieben sind, d.h. ordnungsgemäße Schreib- und Löschvorgänge durchgeführt wurden, oder ob die Speicherzellen schwach gelöscht bzw. geschrieben sind, was auf eine betrügerische Manipulation rückschließen läßt.

Zweckmäßigerweise wird an einen Bediener der Inhalt einer Speicherzelle nur bezüglich der mittleren Bewertungsschwelle ausgegeben. Dadurch bleibt einem in betrügerischer Absicht Handelndem verborgen, daß in der integrierten Schaltung der Debit-Karte intern mit verschiedenen Bewertungsschwellen gearbeitet wird. Die mittlere Lesespannung ist zweckmäßigerweise die Lesespannung, die auch bei Debit-Karten nach dem Stand der Technik, also ohne umschaltbare Lesespannungen, üblicherweise angewendet wird. Aus Gründen der schaltungstechnischen Vereinfachung können die erste Lesespannung zur Bewertung vor einer Schreibphase und die Lesespannung zu für einen sonstigen Lesevorgang, z.B. zur Ausgabe an den Bediener, gleich sein und bei der bisher üblichen Lesespannung liegen. Die zweite Lesespannung zur Bewertung vor der Löschphase liegt dann niedriger als diese.

Eine betrügerische Manipulation kann unter anderem nun dadurch erkannt werden, daß durch ein Lesen vor der Schreibphase und ein Lesen vor der Löschphase für das Übertragbit und das Kontrollbit der Speicherzustand festgestellt wird. Dabei wird für ersteren Lesevorgang mit einer höheren, vorzugsweise über der mittleren Lesespannung liegenden Lesespannung gelesen, bei letzteren Lesevorgang mit einer niedrigeren, vorzugsweise unterhalb der mittleren Lesespannung liegenden Lesespannung.

Wenn beim ersten Lesevorgang vor der Schreibphase erkannt wird, daß für das Übertragbit und das Kontrollbit je ein gelöschter Zustand vorliegt (und ein Hochzählen des Zählers für eine Entwertung einer geldwerten Einheit erfolgen soll), dann werden beide Bit geschrieben. Wenn beim nachfolgenden Lesevorgang vor der Schreibphase festgestellt wird, daß beide Bit geschrieben sind, liegt der Normalfall vor; es können dann das Kontrollbit und der niedrigerwertige Zählerteilbereich gelöscht werden.

Wenn beim Lesevorgang vor der Schreibphase festgestellt wird, daß für das Übertragbit und das Kontrollbit je ein geschriebener Zustand vorliegt, wird bei der Schreibphase kein Schreiben ausgeführt. Wird beim Lesevorgang vor der Löschphase das gleiche Ergebnis festgestellt, werden das Kontrollbit und der niedrigerwertige Zählerteilbereich gelöscht. Dies ist der Fall, wenn während eines Schreibvorgangs unterbrochen wurde, aber keine betrügerische Manipulation stattfand.

Wenn beim Lesevorgang vor der Schreibphase für das Übertragbit und das Kontrollbit verschiedene Zustände festgestellt werden (gelöscht; geschrieben oder geschrieben; gelöscht), dann wurden diese durch eine betrügerische Manipulation erzeugt. Dabei ist bereits eines der Bits durch den kummulativen Effekt umgekippt, das andere noch nicht. Dann wird durch Schaltungslogik der nachfolgende Schreibvorgang unterdrückt. Die Karte wäre somit für weitere Handhabung blockiert. Zweckmäßigerweise kann aber die Schaltungslogik derart ausgeführt werden, daß für den Fall, wenn das Übertragbit gelöscht ist und das Kontrollbit geschrieben ist, nur das Kontrollbit gelöscht wird, oder nur das Übertragbit geschrieben wird. Damit wird die Karte entwertet, so daß der möglicherweise durch die Manipulation erreichbare Vorteil sicher verwirkt wird.

Beim Lesevorgang vor der Löschphase treten dann nur die Zustände auf, das Übertragbit und Kontrollbit jeweils gleichzeitig geschrieben oder gelöscht sind. Im ersteren Fall wird wie oben beschrieben, mit dem Löschen des Kontrollbits und des niedrigerwertigen Zählerteilbereichs fortgefahren. Im letzteren Fall liegt keine Bedingung für einen Löschvorgang vor. Vorzugsweise kann aus Gründen der Sicherheit dann nur das bereits gelöschte Kontrollbit noch einmal gelöscht werden.

Um das Problem der Verträglichkeit nach dem erfindungsgemäßen Verfahren realisierter Debit-Karten mit Debit-Karten nach dem Stand der Technik, die keinen Kontrollspeicher aufweisen und folglich auch keine Ablaufsteuerungsmaßnahmen, zu lösen, kann vorgesehen werden, daß die Ablaufsteuerungsmaßnahmen und der Kontrollspeicher abschaltbar sind. Diese sind zunächst inaktiv geschaltet und werden erst durch einen Befehl des mit der Karte kommunizierenden Bediengerätes aktiv geschaltet. Dies kann beispielsweise durch einen Schreibbefehl an eine festgelegte Adresse der Karte erreicht werden, durch den die Ablaufsteuermaßnahmen und der Kontrollspeicher eingeschaltet werden.

Bei der Schaltungsanordnung wird die Aufgabe dadurch gelöst, daß ein Steuerungsmittel vorgesehen ist, durch das mindestens zwei verschiedene Steuergatespannungen für die Speicherzellen erzeugt werden, daß eine Dekodereinrichtung vorgesehen ist, die mit Datensignalleitungen der Speicherzellen verbunden ist und durch die Speicherzustände einer adressierten Speicherzelle des Zählspeichers und des Kontrollspeichers ausgewertet werden, und daß eine Ablaufsteuereinrichtung vorgesehen ist, durch die Steuerungsmittel gesteuert werden, mit denen das Steuergate einer Speicherzelle des Kontrollspeichers und die Steuergates des nächst niedrigerwertigen Teilbereichs des Zählspeichers verbunden oder getrennt werden können.

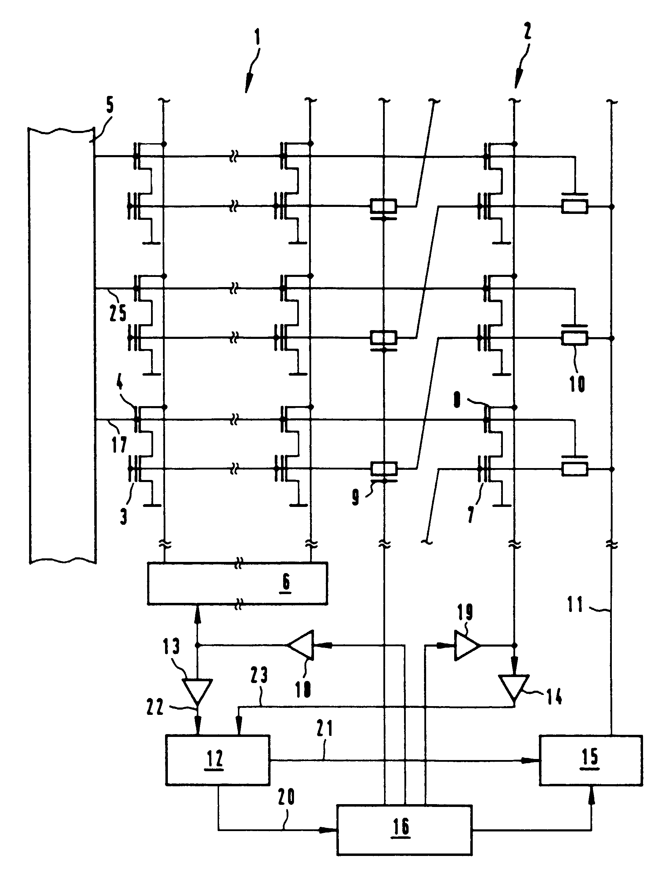

Eine erfindungsgemäße Schaltungsanordnung ist in der Figur dargestellt. Sie enthält einen Zahlspeicher 1, der in Speicherabschnitte mit verschiedener Wertigkeit eingeteilt ist, wobei ein Speicherabschnitt einer dargestellten Speicherzellenzeile entspricht. Jede Speicherzelle enthält einen n-Kanal-Transistor mit schwebendem Gate 3 und einen n-Kanal-Auswahltransistor 4, die wie oben angegeben geschaltet sind. Eine Speicherzelle wird zeilenmäßig über einen Adreßdekoder 5 und spaltenmäßig über einen Spaltendekoder 6 angesprochen. Jeder Zeile ist eine Speicherzelle eines Kontrollspeichers 2 zugeordnet. Der Auswahltransistor einer Speicherzelle des Kontrollspeichers wird von der gleichen Auswahlleitung 17 angesteuert wie die zugeordnete Zeile des Speichers 1. Jede Speicherzelle des Kontrollspeichers 2 enthält einen n-Kanal-Transistor 7 mit schwebendem Gate und einen Auswahltransistor 8, die wie oben angegeben geschaltet sind. Dabei sind die Steuergateanschlüsse der Transistoren 3 einer Zeile des Speichers 1 über je einen Transfer-Transistor 9 vom Verarmungstyp mit dem Gateanschluß der Speicherzelle der nächsthöheren Wertigkeit des Kontrollspeichers 2 verbunden. Außerdem ist dieser Steuergateanschluß über einen weiteren Transfer-Transistor 10 vom Verarmungstyp mit einer Leitung 11 verbunden. Der Gateanschluß des Transistors 10 ist mit der Auswahlleitung 12 dieser höherwertigen Speicherzeile verbunden. Die Schaltungsanordnung enthält folgende weitere Logikschaltungen zur Steuerung: Eine Dekodiereinrichtung 12, mit der die über die Leseverstärker 13, 14 verstärkten Ausgangslesesignale einer Leseleitung des Speichers 1 und der Leseleitung des Speichers 2 verarbeitet werden; eine Einstelleinrichtung 15, durch die an der Leitung 11 die entsprechenden Lese- und Programmierspannungen für die Steuergates der Speicherzellen zeitrichtig bereitgestellt werden; eine Schreib-/Löschablaufsteuerung 16, durch die die Programmierspannungen über Programmierverstärker 18, 19 für die Datenleitungen der Speicher 1, 2 bereitgestellt werden und die Einstelleinrichtung 15 und die TransferTransistoren 9 gesteuert werden. Zur zeitrichtigen Bereitstellung der Steuergatespannungen durch die Einrichtung 15 wird die Einrichtung 15 durch entsprechende Steuersignale aus der Dekodereinrichtung 12 und der Ablaufsteuerung 16 versorgt.

Zum Löschen eines niedrigerwertigen Zählerbereichs und des zugeordneten, höherwertigen Kontrollbits wird über die Transfertransistoren 10, 9 den entsprechenden Steuergateanschlüssen die über die Einrichtung 15 an der Leitung 11 bereitgestellte Löschspannung zugeführt, wobei der Transistor 10 durch die Adreßleitung 25 und der Transistor 9 durch die Einrichtung 16 entsprechend gesteuert werden. Wenn nur das Kontrollbit gelöscht wird, ist der Transistor 10 angesteuert, der Transistor 9 gesperrt. Das Unterdrücken von Schreibvorgängen bei Erkennung einer unvollständig geschriebenen Speicherzelle durch die Dekodereinrichtung 12 erfolgt durch Abschalten der Programmierverstärker 18 bzw. 19.

An der Leitung 11 sind durch die Einrichtung 15 die folgenden Spannungen eingestellt: Beim Lesevorgang vor einer Schreibphase eine höhere Lesespannung als beim Lesen vor dem Löschvorgang, bei ersterem Lesevorgang vorzugsweise eine über der mittleren Lesespannung liegende Lesespannung, bei letzterem Lesevorgang eine darunterliegende Lesespannung. Für das Auslesen der Daten, z.B. zur Datenausgabe an den Benutzer, wird eine unter der hohen Lesespannung liegende Lesespannung, vorzugsweise die mittlere Lesespannung verwendet. Für das Löschen wird an der Leitung 11 die Löschspannung von 20 Volt erzeugt, für das Schreiben beträgt die Spannung 0 Volt.

In der nachfolgenden Tabelle sind die von der Dekodereinrichtung 12 zu entscheidenden Betriebs fälle angegeben, aus denen entsprechende Steuersignale an den Ausgangsleitungen 20, 21 der Einrichtung 12 zu erzeugen sind, so daß sich die in der Tabelle angegebenen entsprechenden Betriebsarten ergeben. Als Eingangsgrößen werden hierzu das Übertragbit einer Zählerstufe des Speichers 1 ausgewertet, das an der Leitung 22 zur Verfügung steht, und das zugeordnete Kontrollbit, das an der Leitung 23 zur Verfügung steht.

Dekodierung vor einer Schreibphase

| | Übertragbit | Kontrollbit | Aktion während der Schreibphase |
|---|---|---|---|
| (a) | 1 | 1 | Schreiben von Übertragbit und Kontrollbit |
| (b) | 0 | 0 | kein Schreibvorgang |
| (c) | 0 | 1 | kein Schreibvorgang oder nur Löschen des Kontrollbit |
| (d) | 1 | 0 | kein Schreibvorgang oder nur Löschen des Kontrollbit |

Dekodierung vor einer Löschphase

| | Übertragbit | Kontrollbit | Aktion während der Löschphase |
|---|---|---|---|
| (e) | 0 | 0 | Löschen des niedrigerwertigen Zählerbereichs und des Kontrollbit |
| (f) | 1 | 1 | Kein Löschen oder nur Löschen des Kontrollbit |
| (g) | 0 | 1 | Kein Löschen oder nur Löschen des Kontrollbit |
| (h) | 1 | 0 | Kein Löschen oder nur Löschen des Kontrollbit |

## Patentansprüche

1. Verfahren zum Entwerten geldwerter Einheiten in einer integrierbaren elektronischen Schaltung einer Debit-Karte, die einen aus nichtflüchtigen, elektrisch löschbaren und beschreibbaren Speicherzellen bestehenden Zählspeicher (1) enthält, der als mehrstufiger Zähler betrieben wird, und einen aus nichtflüchtigen, elektrisch löschbaren und beschreibbaren Speicherzellen bestehenden Kontrollspeicher (2) enthält, der den Zählerstufen zugeordnete Kontrollspeicherbereiche aufweist,
**dadurch gekennzeichnet,**
daß zur Ausgabe des Inhalts einer Speicherzelle an einen Bediener zum Lesen der Speicherzelle eine mittlere Bewertungsschwelle verwendet wird, und
daß vor einem Zählvorgang, der durch Schreiben einer Speicherzelle des Zählspeichers (1) und der zugehörigen Speicherzelle des Kontrollspeichers (2) definiert ist, der Inhalt zumindest der Speicherzelle des Kontrollspeichers (2) mit einer zur mittleren Bewertungsschwelle verschiedenen Bewertungsschwelle, insbesondere einer kritischeren, gelesen wird und der Zählvorgang von dem Leseergebnis abhängig gesteuert wird.

2. Verfahren nach Anspruch 1,
**dadurch gekennzeichnet,**
daß bei Speicherzellen vom n-Kanal-Typ mit schwebendem Gate die kritischere Bewertungsschwelle höher als die mittlere Bewertungsschwelle ist.

3. Verfahren nach einem der Ansprüche 1 oder 2,
**dadurch gekennzeichnet,** daß verschiedenen Bewertungsschwellen durch verschiedene am Steuergate einer nichtflüchtigen Speicherzelle anliegende Lesespannungen erreicht werden.

4. Verfahren nach Anspruch 3,
**dadurch gekennzeichnet,**
daß vor einer Schreibphase für ein Übertragbit in eine Speicherzelle einer nächst höherwertigen Zählerstufe des Zählspeichers (1) und ein zugeordnetes Kontrollbit in eine Speicherzelle des Kontrollspeichers (2) mit einer ersten Lesespannung gelesen wird, vor einer Löschphase einer niedrigerwertigen Zählerstufe und des Kontrollbits mit einer zweiten Lesespannung gelesen wird.

5. Verfahren nach Anspruch 4,
**dadurch gekennzeichnet,**
daß bei Speicherzellen vom n-Kanal-Typ mit schwebendem Gate die erste Lesespannung höher als die zweite Lesespannung ist.

6. Verfahren nach einem der Ansprüche 3 bis 5,
**dadurch gekennzeichnet,** daß der Schreibvorgang für das Übertragbit und das Kontrollbit während der Schreibphase unterdrückt wird, wenn durch die Bewertung vor der Schreibphase das Übertragbit und das Kontrollbit als geschrieben erkannt werden.

7. Verfahren nach einem der Ansprüche 3 bis 6,
**dadurch gekennzeichnet,** daß der Schreibvorgang für das Kontrollbit während einer Schreibphase unterdrückt wird, wenn entweder das Übertragbit oder das Kontrollbit als geschrieben erkannt werden.

8. Verfahren nach einem der Ansprüche 3 bis 7,
**dadurch gekennzeichnet,** daß der Schreibvorgang für das Kontrollbit während einer Schreibphase unterdrückt wird und das Kontrollbit gelöscht wird, wenn entweder das Übertragbit oder das Kontrollbit als geschrieben erkannt werden.

9. Verfahren nach einem der Ansprüche 3 bis 7,
**dadurch gekennzeichnet,** daß der Schreibvorgang für das Kontrollbit während einer Schreibphase unterdrückt wird und das Übertragbit geschrieben wird, wenn das Übertragbit gelöscht ist und das Kontrollbit geschrieben ist.

10. Schaltungsanordnung zur Durchführung des Verfahrens nach einem der Ansprüche 1 bis 9, bei der der Zählspeicher (1) in Teilbereiche unterschiedlicher Wertigkeit aufgeteilt ist und bei dem durch Schaltungsmittel gesteuert wird, daß jeder Teilbereich nur dann gelöscht wird, wenn ein Übertragbit in eine vorher unbeschriebene Speicherzelle des Teilbereichs der nächtshöheren Wertigkeit geschrieben wird, und
bei der ein Bit des Kontrollspeichers (2), jeweils einem Teilbereich zugeordnet ist, und der Kontrollspeicher (2) durch Schaltungsmittel gesteuert wird, daß eine Speicherzelle des Kontrollspeichers (2) beschrieben wird, wenn eine Speicherzelle des zugeordneten Teilbereichs des Zählspeichers (1) beschrieben wird, und gelöscht wird, wenn der nächst niedrigerwertiger Teilbereich des Zählspeichers (1) gelöscht wird,
**dadurch gekennzeichnet,** daß ein Steuerungsmittel (15) vorgesehen ist, durch das mindestens zwei verschiedene Steuergatespannungen für die Speicherzellen erzeugt werden,
daß eine Dekodereinrichtung (12) vorgesehen ist, die mit Datensignalleitungen der Speicherzellen verbunden ist und durch die Speicherzustände einer adressierten Speicherzelle des Zählspeichers (1) und des Kontrollspeichers (2) ausgewertet werden, und daß eine Ablaufsteuereinrichtung (16) vorgesehen ist, durch die Steuerungsmittel (9) gesteuert werden, mit denen das Steuergate einer Speicherzelle des Kontrollspeichers und die Steuergates des nächst niedrigerwertigen Teilbereichs des Zählspeichers (1) verbunden oder getrennt werden können.

11. Schaltungsanordnung nach Anspruch 10,
**dadurch gekennzeichnet,** daß jedem Teilbereich des Speichers (1) nur eine einzige Speicherzelle des Kontrollspeichers (2) zugeordnet ist.

## Claims

1. Method for deducting money value units in an integrable electronic circuit of a debit card which contains a counting memory (1) comprising non-volatile memory cells which can be cleared and written to electrically and which can be operated as a multi-stage counter, and which contains a check memory (2) comprising non-volatile memory cells, which can be cleared and written to electrically, and having check memory regions which are assigned to the counter stages, characterized in that an average evaluation threshold is used for outputting the contents of a memory cell to an operator in order to read the memory cell, and in that, before a counting process which is defined by writing a memory cell of the counting memory (1) and the associated memory cell of the check memory (2), the contents of at least the memory cell of the check memory (2) are read with an evaluation threshold which is different from the average evaluation threshold, in particular a more critical evaluation threshold, and the counting process is controlled as a function of the read result.

2. Method according to Claim 1, characterized in that in memory cells of the n-channel type with floating gate, the multiple evaluation threshold is higher than the average evaluation threshold.

3. Method according to one of Claims 1 or 2, characterized in that various evaluation thresholds are reached by means of various read voltages which are applied to the control gate of a non-volatile memory cell.

4. Method according to Claim 3, characterized in that, before a writing phase for a transfer bit into a memory cell of a next higher-level counter stage of the counting memory (1) and for an assigned check bit into a memory cell of the check memory (2), reading is carried out with a first read voltage, and before a clearing phase of a lower-level counter stage and of the check bit, reading is carried out with a second read voltage.

5. Method according to Claim 4, characterized in that in memory cells of the n-channel type with floating gate the first read voltage is higher than the second read voltage.

6. Method according to one of Claims 3 to 5, characterized in that the writing process for the transfer bit and the check bit is suppressed during the writing phase if the transfer bit and the check bit are detected by the evaluation before the writing phase as having been written.

7. Method according to one of Claims 3 to 6, characterized in that the writing process for the check bit is suppressed during a writing phase if either the transfer bit or the check bit are detected as having been written.

8. Method according to one of Claims 3 to 7, characterized in that the writing process for the check bit is suppressed during a writing phase and the check bit is cleared if either the transfer bit or the check bit are detected as having been written.

9. Method according to one of Claims 3 to 7, characterized in that the writing process for the check bit is suppressed during a writing phase and the transfer bit is written if the transfer bit is cleared and the check bit is written.

10. Circuit arrangement for carrying out the method according to one of Claims 1 to 9, in which the counting memory (1) is divided into subregions with different significance and in which control is carried out by means of circuit means, and in that each subregion is cleared only if a transfer bit is written into a previously unwritten memory cell of the subregion of the next higher significance, and in which a bit of the check memory (2) is assigned in each case to a subregion, and the check memory (2) is controlled by circuit means, in that a memory cell of the check memory (2) is written to if a memory cell of the assigned subregion of the counting memory (1) is written to, and is cleared if the next lowest-level subregion of the counting memory (1) is cleared, characterized in that control means (15) are provided by means of which at least two different control gate voltages are generated for the memory cells, in that a decoding device (12) is provided which is connected to data signal lines of the memory cells and by means of which memory states of an addressed memory cell of the counting memory (1) and of the check memory (2) are evaluated, and in that a sequence control device (16) is provided by means of which control means (9) are controlled, with which the control gate of a memory cell of the check memory and the control gates of the next lower-level subregion of the counting memory (1) can be connected or separated.

11. Circuit arrangement according to Claim 10, characterized in that each subregion of the memory (1) is assigned only a single memory cell of the check memory (2).

## Revendications

1. Procédé pour débiter des unités valorisées dans un circuit électronique pouvant être intégré d'une carte de débit, qui contient une mémoire (1) de comptage qui est constituée de cellules de mémoire non volatiles, qui peuvent être effacées électriquement et dans lesquelles on peut écrire, et que l'on peut faire fonctionner comme compteur à plusieurs étages, et une mémoire (2) de contrôle qui est constituée de cellules de mémoire non volatiles, qui peuvent être effacées électriquement et dans lesquelles on peut écrire, et qui comportent des zones de mémoire de contrôle associées aux étages de compteur,
caractérisé en ce que,
pour donner le contenu d'une cellule de mémoire à un utilisateur, on utilise pour lire la cellule de mémoire un seuil d'évaluation moyen et
en ce que, avant une opération de comptage qui est définie par l'écriture d'une cellule de mémoire de la mémoire (1) de comptage et de la cellule de mémoire associée de la mémoire (2) de contrôle, le contenu au moins de la cellule de mémoire de la mémoire (2) de contrôle est lu en ayant un seuil d'évaluation différent du seuil d'évaluation moyen, notamment un seuil plus critique, et l'opération de comptage est commandée en fonction du résultat de lecture.

2. Procédé suivant la revendication 1, caractérisé en ce que, pour des cellules de mémoire du type à canal du type de conductivité n à grille flottante, le seuil d'évaluation plus critique est supérieur au seuil d'évaluation moyen.

3. Procédé suivant l'une des revendications 1 ou 2, caractérisé en ce que l'on obtient divers seuils d'évaluation par diverses tensions de lecture s'appliquant à la grille de commande d'une cellule de mémoire non volatile.

4. Procédé suivant la revendication 3, caractérisé en ce quel avant une phase d'écriture pour un bit de transmission, on lit dans une cellule de mémoire d'un étage de compteur de valeur immédiatement supérieure de la mémoire (1) de comptage et pour un bit de contrôle associé dans une cellule de mémoire de la mémoire (2) de contrôle, en ayant une première tension de lecture et on lit en ayant une deuxième tension de lecture avant une phase d'effaçage d'un étage de compteur de valeur inférieure et du bit de contrôle.

5. Procédé suivant la revendication 4, caractérisé en ce que, pour des cellules de mémoire du type à canal de conductivité de type n à grille flottante, la première tension de lecture est plus grande que la deuxième tension de lecture.

6. Procédé suivant l'une des revendications 3 à 5, caractérisé en ce l'opération d'écriture pour le bit de transmission et le bit de contrôle est supprimée pendant la phase d'écriture si le bit de transmission et le bit de contrôle ont été identifiés comme écrits par l'évaluation avant la phase d'écriture.

7. Procédé suivant l'une des revendications 3 à 6, caractérisé en ce que l'opération d'écriture pour le bit de contrôle est supprimée pendant une phase d'écriture si le bit de transmission ou le bit de contrôle ont été identifiés comme écrits.

8. Procédé suivant l'une des revendications 3 à 7, caractérisé en ce que l'opération d'écriture pour le bit de contrôle est supprimée pendant une phase d'écriture et le bit de contrôle est effacé si le bit de transmission ou le bit de contrôle sont identifiés comme écrits.

9. Procédé suivant l'une des revendications 3 à 7, caractérisé en ce que l'opération d'écriture pour le bit de contrôle est supprimée pendant une opération d'écriture et le bit de transmission est écrit si le bit de transmission est effacé et le bit de contrôle est écrit.

10. Montage pour la mise en oeuvre du procédé suivant l'une des revendications 1 à 9, dans lequel la mémoire (1) de comptage est subdivisée en zones partielles de valeur différentes et dans lequel il est commandé par des moyens de circuit que chaque zone partielle n'est effacée que si un bit de transmission est écrit dans une cellule de mémoire précédemment non écrite de la zone partielle de valeur immédiatement supérieure, et dans lequel un bit de la mémoire (2) de contrôle est associé à une zone partielle, et la mémoire (2) de contrôle est commandée par des moyens de circuits de telle manière qu'une cellule de mémoire de la mémoire (2) de contrôle est écrite si une cellule de mémoire de la zone partielle associée de la mémoire (1) de compteur est écrite et qu'une cellule de mémoire de la mémoire (2) de contrôle est effacée si la zone partielle immédiatement inférieure de la mémoire (1) de compteur est effacée, caractérisé en ce qu'il est prévu un moyen (15) de commande par lequel sont produits au moins deux tensions de grille de commande différentes pour les cellules de mémoire, en ce qu'il est prévu un dispositif (12) de décodage qui est relié à des lignes de signalisation de données des cellules de mémoire et par lequel des états de mémoire d'une cellule de mémoire adressée de la mémoire (1) de comptage et de la mémoire (2) de contrôle sont exploités, et en ce qu'il est prévu un dispositif (16) de commande de déroulement par lequel sont commandés des moyens (9) de commande par lesquels la grille de commande d'une cellule de mémoire de la mémoire de contrôle et les grilles de commande de la zone partielle de valeur immédiatement inférieure de la mémoire (1) de comptage peuvent être reliées ou séparées.

11. Montage suivant la revendication 10, caractérisé en ce qu'il n'est associé à la zone partielle de la mémoire (1) qu'une seule cellule de mémoire de la mémoire (2) de contrôle.
